(19) Europäisches Patentamt
European Patent Office
Office européen des brevets

(11) Publication number: **0 059 077**
**A1**

(12) **EUROPEAN PATENT APPLICATION**

(21) Application number: **82300838.8**

(22) Date of filing: **18.02.82**

(51) Int. Cl.³: **B 29 D 7/24**, C 08 G 65/40

(30) Priority: **19.02.81 JP 23706/81**

(43) Date of publication of application: **01.09.82**
**Bulletin 82/35**

(84) Designated Contracting States: **DE FR GB**

(71) Applicant: **SUMITOMO CHEMICAL COMPANY, LIMITED, 15 Kitahama 5-chome Higashi-ku, Osaka-shi Osaka-fu (JP)**

(72) Inventor: **Fukushima, Nobuo, No. 4396-14, Sakamotohonmachi, Ootsu-shi Shiga (JP)**
Inventor: **Saitou, Teruo, 7-64, Nishishibukawa 2-chome, Kusatsu-shi Shiga (JP)**
Inventor: **Hayashida, Haruo, No. 7-50-508, Nishimiyahara 1-chome Yodogawa-ku, Osaka-shi Osaka (JP)**

(74) Representative: **Diamond, Bryan Clive et al, Gee & Co. Chancery House Chancery Lane, London WC2A 1QU (GB)**

(54) **Method of orientating thermoplastic polyether ether ketone films.**

(57) A thermoplastic polyether ether ketone film or sheet containing therein a repeating unit represented by the formula:

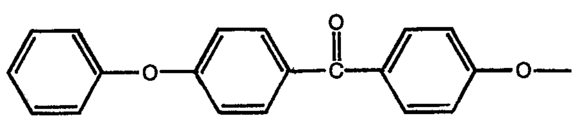

alone or in combination with one or more different repeating units is calendered at a linear pressure of at least 100 kg/cm by the use of at least one pair of pressure rolls at a temperature of 80°C to 320°C while applying a backward tension of at least 78.5 Pa x $10^5$.

The polymeric film or sheet may contain units to give heat-resistance, e.g. of a polyether sulfone. 16 examples of repeating units of a polyarylene polyether sulfone are given.

A lubricant, e.g. polyethylene glycol, may be used, and the film may be preheated.

The rolled film or sheet may have a thickness of 28 to 270 μm and has a high tensile strength of up to 3040 Pa x $10^5$ in the longitudinal direction.

EP 0 059 077 A1

Method of orientating thermoplastic polyether ether ketone films

The present invention relates to a method for the orientation of films made of a thermoplastic polyether ether ketone. The term "films" as used herein refers to both films and sheets.

In general, thermoplastic polymers containing an aromatic ring or rings, in a main chain thereof, e.g. a polyether ether ketone, have rigid molecular chains and good heat resistance. Therefore, they are widely used where high heat resistance is required, e.g. an electrically insulating film for a motor, an electrically insulating film for a transformer, an electrically insulating film for a condenser, and a flexible printed circuit substrate. In these applications, good mechanical strength is also required. For example, an electrically insulating film for a motor is required to have a tensile strength of 1470 Pa x $10^5$ in the taping thereof, and films having a tensile strength of less than 980 Pa x $10^5$ are not suitable for practical use since they suffer from various problems and their other mechanical characteristics are also poor.

These defects in mechanical characteristics can be improved by orientating the molecules in the film by application of mechanical deformation.

It is well known to orientate a thermoplastic film by stretching. However, stretching of thermoplastic polyether

ether ketone films has to be performed at very high temperatures and furthermore needs severe temperature control. Even under such controlled temperature conditions, it is difficult to perform the stretching continuously and stably because the stretching properties are still poor, and film-cutting readily occurs even though the stretching can be performed. Thus, it has been difficult to commercially produce thermoplastic polyether ether ketone films having high mechanical strength.

We have now found conditions which allow, on an industrial scale, the continuous and stable orientation of a thermoplastic polyether ether ketone film to improve its mechanical properties and permit production of a film having high mechanical strength.

The present invention provides a method for the orientation of a film of a crystalline thermoplastic polyether ether ketone containing therein at least 50 wt.% of a repeating unit represented by the formula:

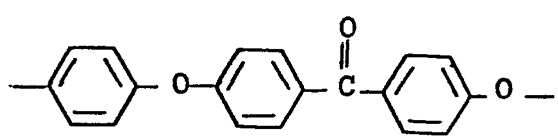

alone or in combination with other repeating units, which comprises rolling the crystalline thermoplastic polyether ether ketone film at a linear pressure of at least 100 kg/cm by the use of a pair of pressure rolls maintained within a temperature range of from 80°C to 320°C while applying a backward tension of at least 78.5 Pa x $10^5$ (80 kg/$cm^2$).

The polyether ether ketone has an intrinsic viscosity (measured in concentrated sulphuric acid having a specific gravity of 1.8 g/cc at 25°C) of at least 0.7. The polymer may also contain, for the purpose of improving the fluidity in extrusion processing, up to 50 wt.% of heat resistant polymers, such as a polyarylene polyether polysulfone, polyarylate, polyester, nylon or polycarbonate, or a polyolefin,

such as polyethylene or polypropylene.

The term "polyarylene polyether polysulfone" as used herein refers to a polyarylene compound in which the arylene unit is positioned, at random or regularly, together with the ether and sulfone bonds. Examples are those compounds comprising the repeating units represented by the formulae (1) to (16) shown below. In particular, compounds comprising the repeating units represented by the formula (1) or (6) are preferred.

(1) 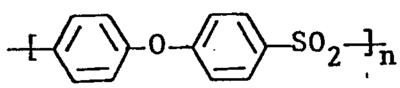

(2) 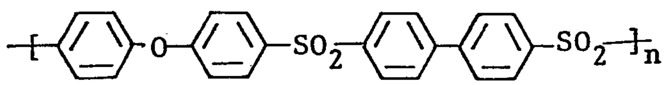

(3) 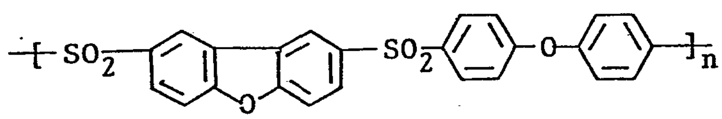

(4) 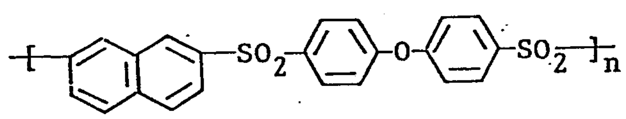

(5) 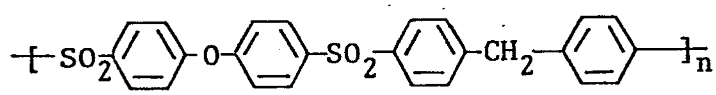

(6) 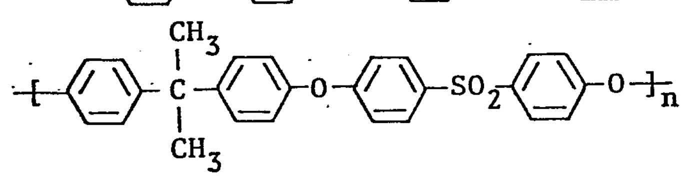

(7) 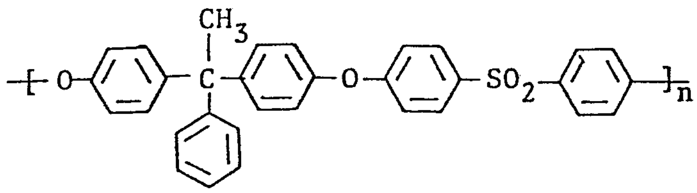

(8) 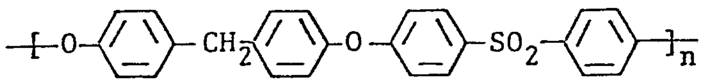

(9) 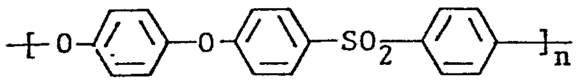

(10) 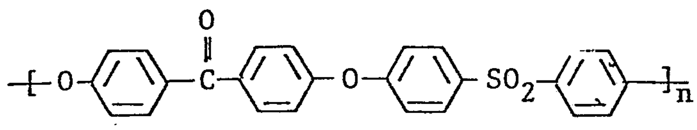

(11) 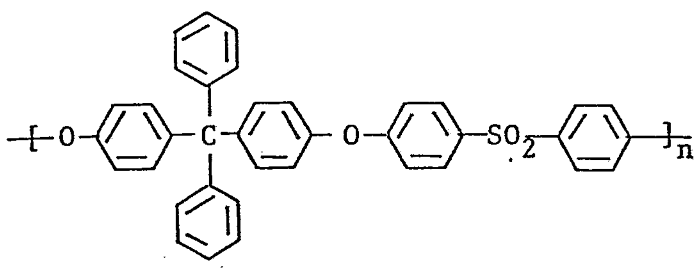

(12) 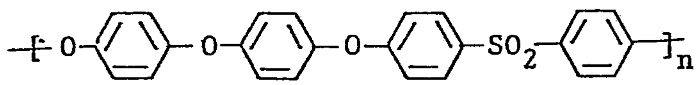

(13) 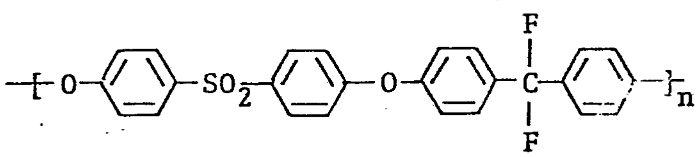

(14) 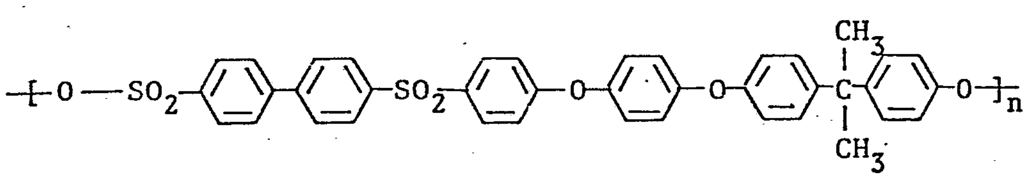

(15) 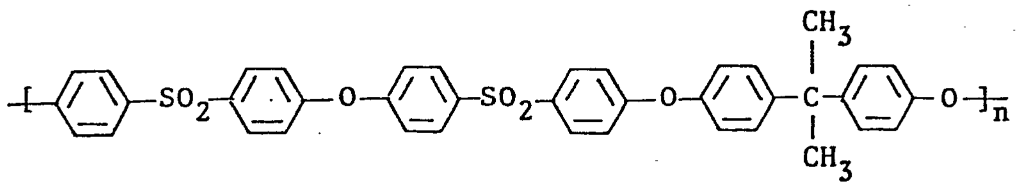

(16) 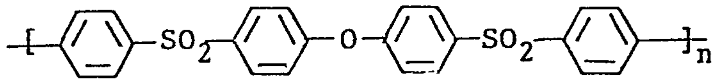

The term "polyarylate" as used herein refers to aromatic polyesters (hereinafter referred to as "APC") which are synthesized from dihydric phenols or their functional derivatives, and aromatic dibasic acids or their functional derivatives; and aromatic polyesters (hereinafter referred to as "APE") which are synthesized from dihydric phenols or their functional derivatives, aromatic dibasic acids or their functional derivatives, and p-oxybenzoic acid or its functional derivatives.

Depending on the ultimate use of the film, it may contain inorganic fillers and pigments, e.g. calcium carbonate, fine silicate, talc, basic magnesium carbonate, alumina, hydrated alumina, barium sulfate, calcium sulfate, mica powder, zinc white, titanium oxide or carbon black.

In rolling the thermoplastic polyether ether ketone film in accordance with the method of the invention, it is necessary to apply thereto a backward tension of at least 78.5 Pa x $10^5$ at the inlet side of the pressure rolls. The term "backward tension" as used herein refers to a force acting in the opposite direction of that in which the film travels, which is also called feed tension. When the backward tension is less than 7,850,000 Pa, the neutral point (maximum pressure point) in the pressure rolls moves toward the inlet side of the pressure rolls. This tends to cause poor thrust and impairs stable orientation processing.

With regard to the rolling temperature, the pressure rolls can be set at any desired temperature within the broad range of from 80°C to 320°C. This is one of the features of the invention as compared to the conventional stretching method. In accordance with the conventional stretching method, although the stretching can be performed within a very narrow temperature range of around 280°C, film-cutting often occurs, and it is not possible to continuously perform the orientation on an industrial scale. On the other hand, the method of the invention permits stable and continuous orientation within the range of from 80°C to 320°C on an industrial scale.

When the rolling temperature is lower than the above specified lower limit (80°C), the desired rolling down ratio cannot be obtained unless a number of pressure roll groups are used and the pressure applied between the rolls is significantly increased. This causes various problems in the design or construction of rolling apparatus and needs expensive equipment.

On the other hand, when the rolling temperature is higher than the above specified upper limit (320°C), the thermoplastic polyether ether ketone film sticks onto the pressure roll, and it becomes impossible to obtain the desired orientation effect.

The linear pressure to be applied to the film must be at least 100 kg/cm. At a linear pressure lower than 100 kg/cm, sufficient orientation cannot be attained.

In order to reduce the friction coefficient between the pressure rolls and the film in rolling in accordance with the method of the invention, a suitable liquid lubricant may be applied to a point at which the pressure is applied onto the film, and the film may be preliminarily heated by heating such as by infrared rays or far infrared rays, high frequency heating, hot air, steam or a hot liquid bath.

The thus obtained thermoplastic polyether ether ketone film having high mechanical strength has several advantages over a polyimide film having similar heat resistance. For example, a typical polyimide film sold under the trade name "Kapton" by du Pont de Nemours & Co., Inc., U.S.A. has various defects in respect of quality, e.g. resistance to alkalis and resistance to hot water are poor, and in heat-sealing the polyimide film, it is necessary to laminate another thermoplastic resin film thereon since the polyimide film is thermosetting and cannot be sealed as such, and furthermore, it is expensive. On the other hand, the thermoplastic polyether ether ketone film having high mechanical strength which is produced by the method of the invention has excellent mechanical properties, resistance to alkalis and resistance to hot water, and furthermore, it can be heat-sealed since it is thermoplastic. Moreover, the film of the invention is advantageous in production cost over the polyimide film, and thus it can be expected to be industrially useful.

The following are Examples of the invention and Comparative Examples.

Example 1

A thermoplastic polyether ether ketone resin (non-reinforced grade, produced by Imperial Chemical Industries Limited) was extruded from a 400 nm wide T-die using a 30 mm diameter screw extruder to form a 100 μm thick film.

The raw film thus formed was rolled by means of a pair of pressure rolls having a diameter of 260 mm and a face length of 700 mm whilst applying backward tension by means of a magnetic brake, under the conditions shown in the table below, run (a) being without and run (b) being with lubricant, to obtain a rolled film having a good outer appearance. The observed rolling condition, rolling down (calendering) ratio, tensile strengths and final thickness are also shown in the table.

The lubricant, when used, was polyethylene glycol of 200 units chain length.

Example 2

80% by weight of a thermoplastic polyether ether ketone resin (non-reinforced grade, produced by Imperial Chemical Industries Limited) and 20% by weight of the polyarylene polyether sulfone resin of formula (I) shown above (200 P, produced by I.C.I. Limited) were blended, and the mixture was granulated, followed by extruding from a 400 nm wide T-die using a screw extruder having a diameter of 300 nm to form a 300 μm thick sheet.

The raw sheet thus formed was rolled by means of the same pair of pressure rolls as in Example 1 under the conditions shown in the table to obtain a rolled sheet, without and with the glycol as a lubricant. The table shows the results, as for Example 1.

Comparative Examples 1 and 2

The raw film or sheet as formed in Example 1 or 2 was respectively rolled by means of the same pressure rolls but under conditions of temperature or pressure shown in the table, outside the rolling conditions of the invention. The results are shown in the table in the same manner as for Examples 1 and 2.

Comparative Example 3

The same raw film as formed in Example 1 was stretched by means of a group or rolls having different haul-off speeds (the film was not subjected to rolling or to backward tension) and maintained at a temperature of 280°C. Film-cutting occurred frequently, and the stretching could not be performed continuously.

Table

| Example No. | Run | Type of Polymer | Thickness (µm) | Temperature (°C) | Glycol Lubricant | Linear Pressure (kg/cm) | Backward Tension (Pa x $10^5$) | Rolling Ratio (times) | Tensile Strengths longitudinal (Pa x $10^5$) | Tensile Strengths transverse (Pa x $10^5$) | Observation during Rolling |
|---|---|---|---|---|---|---|---|---|---|---|---|
| | | | | Rolling Conditions | | | | | | | |
| Example 1* | | Polyether | 100 | - | - | - | - | - | 835 | 785 | - |
| | a) | Ether Ketone | 28 | 280 | none | 200 | 147 | 3.5 | 3040 | 805 | good rolling properties |
| | b) | | 30 | 100 | yes | 180 | 118 | 3.3 | 2840 | 785 | ditto |
| Comp. Ex. 1 | a) | ditto | - | 330 | none | 200 | 147 | - | - | | sticking |
| | b) | | 90 | 70 | yes | 80 | 147 | 1.1 | 880 | 835 | - |
| | c) | | 80 | 280 | none | 200 | 69 | 1.3 | 930 | 805 | - |
| Example 2* | | Polyether Ether | 300 | - | - | - | - | - | 865 | 835 | - |
| | a) | Ketone (80 wt%)/ Polyether-sulfone (20 wt%) | 90 | 200 | none | 250 | 118 | 3.3 | 2750 | 815 | good rolling properties |
| | b) | | 80 | 150 | yes | 200 | 118 | 3.6 | 3040 | 835 | ditto |
| Comp. Ex. 2 | a) | ditto | 250 | 200 | none | 50 | 118 | 1.2 | 980 | 835 | - |
| | b) | | 270 | 150 | yes | 200 | 29 | 1.1 | 885 | 835 | meandering |
| | c) | | 210 | 30 | yes | 250 | 147 | 1.4 | 1180 | 865 | - |

*Thickness and tensile strengths in first lines of Examples 1 and 2 are of raw film before calendering.

Claims:

1. A method of orientating a film or sheet of a crystalline thermoplastic polyether ether ketone containing therein at least 50 wt.% of a repeating unit represented by the formula:

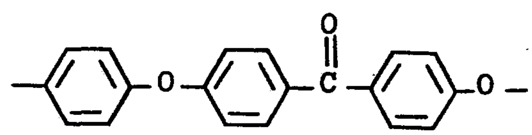

alone or in combination with one or more different repeating units, which comprises rolling said film or sheet at a linear pressure of at least 100 kg/cm by the use of at least one pair of pressure rolls maintained within a temperature range of from 80°C to 320°C while applying to the film or sheet a backward tension of at least 78.5 Pa x $10^5$.

2. A method as claimed in Claim 1, wherein a liquid lubricant is present on the film or sheet as it is rolled.

3. A method as claimed in Claim 1 or 2, wherein the film or sheet is preheated before it is rolled.

4. A method as claimed in Claim 1, 2 or 3, wherein the polymer also contains polyarylene polyether sulfone, polyarylate, polyester, nylon, polycarbonate or polyolefin repeating units.

0059077

European Patent Office

# EUROPEAN SEARCH REPORT

Application number

EP 82 30 0838

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 001 879 (ICI) *Claims 1,3,6,14* | 1,4 | B 29 D 7/24<br>C 08 G 65/40 |
| Y | DE-A-2 724 215 (SUMITONO) *Page 16, lines 9-23; example 1; claims 1,3,12,18* | 1,2 | |
| A | US-A-3 504 075 (R.F.WILLIAMS, Jr. et al.) *Claim 1* | 2 | |
| A | DE-A-2 706 688 (ROHM GmbH) *Claims 6,7* | 2 | |
| A | DE-A-2 612 755 (ICI) *Page 13, line 11 to page 15, line 12* | | |

TECHNICAL FIELDS SEARCHED (Int. Cl. 3)

B 29 D 7/00
B 29 D 7/24
C 08 G 61/12
C 08 G 65/40

The present search report has been drawn up for all claims

| Place of search | Date of completion of the search | Examiner |
|---|---|---|
| THE HAGUE | 21-04-1982 | F. BRUCK |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82